# EUROPEAN PATENT APPLICATION

(11) **EP 3 288 146 A1**
(43) Date of publication of application: **28.02.2018**
(21) Application number: 16473006.1
(22) Date of filing: 26.08.2016
(51) Int. Cl.: H02J 7/00, G07G 5/00, G06Q 20/20, G06Q 30/04

(54) **LOW VOLTAGE FISCAL DEVICE**

(71) Applicant: CPD Ltd., 1113 Sofia (BG)
(72) Inventor: Velev, Ivaylo Emilov, 1137 Sofia (BG); Dosev, Ivan Georgiev, 1582 Sofia (BG)
(74) Representative: Benatov, Samuil Gabriel

(57) **Abstract**

Low voltage fiscal device applicable for both public and private needs, intended to be used for fiscal data collection and processing. The device comprises one or more means for data input (1) as a built-in or external peripheral device, data processing block (2), fiscal memory (3), input for charge and/or power supply (4) for attaching to a source of electrical power supply source, power supply block (5) adapted to convert and distribute voltage to all internal blocks of the fiscal device and peripheral devices. The input power supply is a low voltage input that provides direct current and direct voltage with values up to essentially 5.5V, wherein all internal blocks of the fiscal device and peripheral devices are adapted for power supply with direct current and direct voltage with values of up to essentially 5.5V. Preferably, the input for charge and/or power supply (4) is a standard USB port with the possibility to receive and transmit data from and to external devices.

## Description

### TECHNICAL FIELD OF THE INVENTION

A low voltage fiscal device is applicable for both public and private needs and is intended to be used for fiscal data collection and processing.

### BACKGROUND OF THE INVENTION

The present fiscal devices usually comprise the following basic building blocks: power supply block, central processing unit, fiscal memory, communication block, block for communication with peripheral (external) devices, printing mechanism, block with additional logic for arithmetic and logical operations and monitoring.

At present all fiscal devices are powered from both alternating and direct voltage. When the voltage is alternating, usually the mains power supply is used, which is essentially 230V (or 110V depending on the power network and the electrical standards adapted by the country for which the fiscal device is intended for).

Another known solution is the use of an external power adapter, which lowers the mentioned alternating mains voltage to a lower value, e.g. 18V.

Both known solutions, however, require the input (mains power supply) alternating voltage to be lowered first, depending on its value, and secondly - converted into direct voltage, which inevitably leads to losses from both conversions. This imposes integration, in the circuit of the known fiscal devices, of transforming blocks such as transformers with different conversion factors and rectification components to realize the rectification and stabilization of the alternating voltage. Also, if at least one transformer is used in the circuit solution, this requires the whole construction to conform to its mechanical size, which usually are considerable. Furthermore, the use of a transformer leads to an increase of the total weight of the fiscal device due to the nature and the mechanical characteristics of the materials used for the manufacturing of the transformer.

In other known solutions an external adapter is used to transform directly alternating voltage to direct voltage, wherein the output direct voltage has values essentially above 7V.

In all above mentioned cases, the power supply voltage on the input of the fiscal device is with the mentioned value essentially above 7V. This value is applied as an input for the power supply block of the fiscal devices. The attachment to the power supply block of the alternating mains voltage or the external adapter is strongly individual and depends on the mechanical characteristics and geometrical size of the electrical wires and contact terminals that are used. This provides for hundreds of ways of attaching the output voltage from the mains power supply network or the external adapter to the fiscal device. Thereby, in case of failure of the connecting wires and/or terminals (elements) of the mains power supply or power adapter, to repel the failure, the user has to find exactly identical to the original ones attaching wires and/or terminals (elements). As known, each component manufactured is only kept in stock by manufacturers for a certain period before its manufacturing stops it or, in best case scenario, a new equivalent is being introduced. This could cause a delay in the failure repealing until the exact attaching element or its equivalent is found and moreover, it could cause inconvenience from inability to register or report of fiscal operations - sales of goods and services.

In the known fiscal devices, the direct voltage applied to the input of the power supply block with values above 7V is transformed by increasing it or lowering it to different values that are needed for each of the building blocks of the fiscal device - central processing unit, battery block, printing mechanism, etc. For example, in order to provide the necessary voltage and normal operation of the printing mechanism, it is required the battery block to provide voltage with value essentially 7V. To ensure this voltage it is required first several battery cells to be in a serial connection in order to increase the resultant voltage. This complicates the construction of the fiscal device as more physical space would be needed as well as extra mechanical attachments would be required for mounting the mentioned more than one battery cells. The increase and decrease of the input mains power supply voltage is done by the respective voltage convertors, wherein it is known that with each increase or decrease of the voltage there are losses of electrical energy on one hand, and complication of the circuit solution, on the other, due to the addition of extra electrical components - passive and/or active. In addition, when connecting the mentioned battery cells, it is necessary to take measures for their proper charging with the respective balancing charge circuit solutions, which makes the task even more complicated.

The power supply block also ensures voltage for the central processing unit, the block for communication with peripheral (external) devices, the block for additional logic for arithmetic and logic operations and monitoring, the fiscal memory, the GSM/GPRS module and other. For decades, these blocks have been working essentially with voltage up to 5V, which requires the power supply voltage in the existing solutions to be lowered. This is achieved, again, by the addition of extra components - passive and/or active, which adjust the voltage from the power supply block and/or the battery block to the values necessary for operating of the mentioned blocks and devices.

Depending on their application, the fiscal devices are required to communicate with external peripheral devices. This is achieved via a separate communication port for which must be provided at least one separate attaching terminal mechanically located inside the fiscal device housing. This makes the construction of the fiscal device more complex as the respective communication components are required also be added - semiconductor integrated circuits (SICs) which provide the communication standard for communication with the external device. The mentioned semiconductor integrated circuits, depending on the communication standard are required to provide voltage with positive or negative sign. These are either provided by the respective integrated circuit for the standard being used or by the power supply block. In both cases ensuring these voltages is achieved by decreasing or increasing of the voltage which again leads to losses.

### SUMMARY OF THE INVENTION

The task of the present invention is to provide a compact low voltage fiscal device with low voltage power supply input with direct voltage values of up to 5.5V, preferably a standard USB port, with a simplified design with standard, widely spread on the market components, and increased efficiency and energy savings.

An additional aspect to this task is providing of a universal input for charge and/or power supply, which is also used as an input and output of data.

Another task of the invention is ensuring of a battery block of the fiscal device which is adapted to be directly charged from the input power supply in order to increase the battery cells charge efficiency.

Another task of the invention is providing of a power supply directly to some of the blocks of the fiscal device without increasing the voltage.

These and other tasks are solved by designing a low voltage fiscal device for collection and processing of fiscal data, which comprises from one or more means for data input, a data processing block, fiscal memory, an input for charge and/or power supply for attachment to electrical power source, power supply block with a voltage/current regulator, adapted to convert and distribute the voltage to the internal blocks of the device, and a battery block which accumulates electrical energy with at least one battery cell. According to the invention the input for charge and/or power supply is a low voltage input for direct voltage of up to essentially 5.5V, wherein all internal blocks of the fiscal device are adapted for power supply, directly or indirectly from the input for charge and/or power supply, by direct voltage of up to essentially 5.5V, without increase of the voltage.

Preferably, the input for charge and/or power supply is standard USB port, which can be additionally adapted for data transmission from and to external devices.

In one embodiment, the input for charge and/or power supply is connected to provide voltage directly only to the battery block, wherein the battery block is adapted to power the internal blocks of the device through the power supply block.

In another embodiment the input for charge and/or power supply is connected to provide voltage only to the power supply block, wherein the power supply block is adapted to charge the mentioned at least one battery cell of the battery block.

Preferably, for the last described embodiment, the voltage of the abovementioned at least one battery cell of the battery block is selected in such a way that it allows charging of the battery block directly from the low voltage input for charge and/or power supply, via the voltage/current regulator of the power supply block, without increase of the voltage.

In a third embodiment the input for charge and/or power supply is connected directly to provide voltage to the battery block, without increase of the voltage, as well as to the power supply block, wherein the battery block is connected to provide voltage to the power supply block.

It is possible that the fiscal device includes additionally in its configuration one or more of the following modules: data visualization device, printing mechanism, wireless communication module for data exchange.

In one embodiment, the printing mechanism is adapted to be directly connected to the low voltage input for charge and/or power supply, without increase of the voltage, and in another embodiment, the printing mechanism is adapted to be directly connected to the battery block, without increase of the voltage.

In one embodiment, the wireless communication module is adapted to be connected directly to the low voltage input for charge and/or power supply, without voltage conversion, and in another embodiment, the wireless communication module is adapted to be directly connected to the battery block, without voltage conversion.

It is possible that the battery block comprises from two or more battery cells, which form a battery pack, in which the battery cells are connected in such a way that the battery pack is with an increased maximum current and capacity while keeping the same output voltage.

The described construction allows to be used a low power source in combination with a widespread standard USB port for communication, as well as for charge and/or power supply. In case it faults, it can be easily replaced by a charging device for a smartphone or a tablet or a cable for connection to a personal computer.

The use of one port for both communication and charge and/or power supply, considerably simplifies the construction of the fiscal device and makes the communication easier as a widespread communication protocol is used.

With the proposed solution for power supply and attachment, and the subsequent voltage distribution in the low voltage fiscal device the number of used components is considerably decreased, the efficiency of the low voltage fiscal device is increased when using the electrical energy of the power supply source.

### BRIEF DESCRIPTION OF THE DRAWINGS

The device according to the invention is described in details and it is illustrated by means of preferred embodiments, given as non-limiting examples of scope of the invention, with reference to the accompanying drawings, wherein:
Fig. 1 is a block scheme of the fiscal device according to the invention in its first embodiment in which the input for charge and/or power supply is connected to provide voltage directly the battery block.
Fig. 2 is a block scheme of the fiscal device according to the invention, in its second embodiment, wherein the input for charge and/or power supply is connected to provide voltage only to the power supply block.
Fig.3. is a block scheme of the fiscal device according to the invention, in its third embodiment, wherein the input for charge and/or power supply is connected to provide voltage to both the battery block and to the power supply block.
Fig. 4 is a block scheme of the fiscal device according to the invention, in a modification of the third embodiment, wherein the printing mechanism and wireless communication module are directly connected to the input for charge and/or power supply.
Fig. 5 is a block scheme of the fiscal device according to the invention, in a different modification of the third embodiment, wherein the printing mechanism and the wireless communication module are connected to the battery block in order to be power supplied.
Fig. 6 is a block scheme of the fiscal device according to the invention, in a different modification of the third embodiment, wherein the printing mechanism and the wireless communication module are connected to the power supply block in order to be power supplied.

### EMBODIMENTS OF THE INVENTION

The fiscal device according to the invention is an electronic device made of electromechanical units, connected in a certain way, incorporating semiconducting components - active and passive, and enclosed in one and the same protective housing, and the device itself is low voltage and operates with voltage of essentially up to 5.5 V.

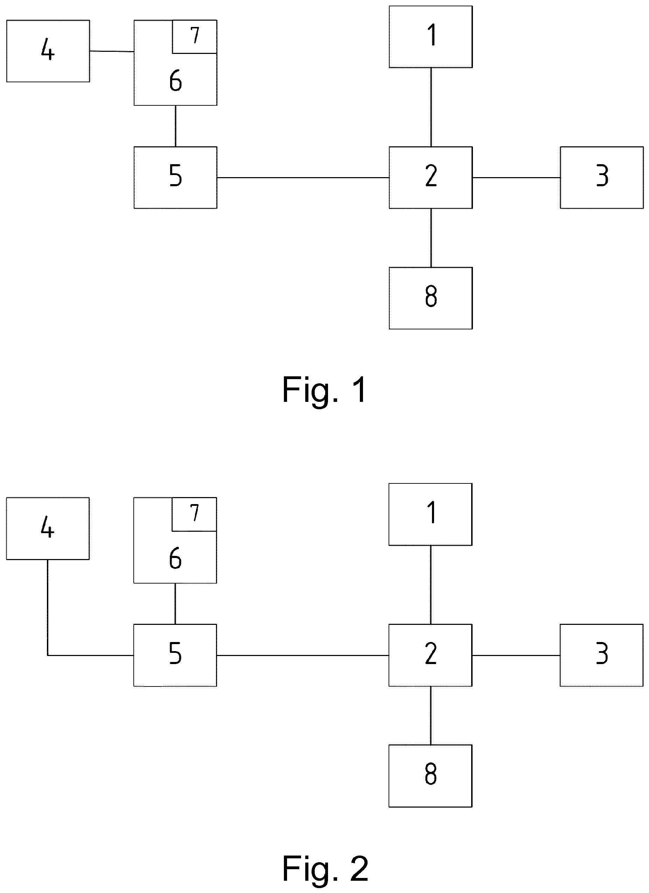

The low voltage fiscal device (figures 1, 2 or 3) comprises the following common blocks: at least one means for data input 1, a data processing block 2, for example central processing unit, fiscal memory 3, an input for charge and/or power supply 4 for attaching to electrical power source, a power supply block 5, adapted to convert and distribute the voltage towards the other internal blocks of the fiscal device, and a battery block 6 with at least one battery cell 7. Additionally, the fiscal device could include other blocks such as: a communication block 10, a printing mechanism 9 and means for data visualization 8, e.g. a display. According to the invention the input for charge and/or power supply 4 is a low voltage input for power supply with direct voltage with values up to essentially 5.5V, wherein all internal blocks of the fiscal device are adapted for power supply with direct voltage with values up to essentially 5.5V.

Preferably, the low voltage input is a standard USB port. In this case the input for charge and/or power supply have attaching terminals, which are according to the USB specification. Even more preferred is the aforementioned standard USB port, except for change and/or power supply and also to be adapted for data transmission from and to external devices.

The low voltage fiscal device receives power supply from power supply source, which could be the mains power supply network through the power supply adapter, external electrical energy storage device, or any other device that is connected to the electrical power supply network or has its own battery block and can supply power with direct voltage and values up to essentially 5.5V. The power supply is provided through a USB cable or another connecter designed for direct current and direct voltage power supply, which is connected to the low voltage input of the low voltage fiscal device, which could be standard USB port or another connector designed for direct current and direct voltage power supply.

The use of just one and the same port for both communication and charge and/or power supply significantly simplifies the construction of the fiscal device and facilitates the communication due to the use of widely spread communication and interface protocols.

After the voltage source is connected, the power supply is provided to the battery block and/or power supply block, where it is split and distributed to the other blocks of the device, such as the central processing unit, the printing mechanism (in the embodiments in which it is present), etc.

According to the invention there are several ways to provide the current from the input for charge and/or power supply 4 to the other blocks of the devices.

### First embodiment, shown in figure 1

The input for charge and/or power supply 4 is connected directly only to the battery block 6, i.e. from the input for charge and/or power supply 4 the voltage is provided directly to the battery block 6. For this purpose, the battery block 6 is adapted with logical analog-to-digital circuits (LADC) to be charged directly by the current, which is provided through the input for charge and/or power supply 4, without the need to convert the voltage. Then the battery block provides voltage to the power supply block 5, which distributes it and/or lowers the voltage to be supplied to other internal blocks of the device such as the central processing unit.

### Second embodiment, shown in figure 2

The input for charge and/or power supply 4 is connected directly only to the power supply block 5. In this embodiment, the current, provided through the input for charge and/or power supply 4 is then provided directly to the power supply block 5, which distributes it and/or lowers it to supply the other internal blocks of the fiscal device. The power supply block 5 is adapted to charge the battery cells 7 of the battery block 6 and for this purpose the power supply block 5 has a voltage/current regulator. Furthermore the power supply block 5 is adapted also to be provided with current from the battery block 6, for the cases when the fiscal device is not connected to a current source or if the voltage provided on the input for charge and/or power supply is insufficient to supply the blocks of the fiscal device.

In this embodiment the voltage of the battery cells 7 of the battery block 6 is chosen in such a way that it allows charging the battery block 6 directly from the low voltage input for charge and/or power supply 4 through the voltage/current regulator of the power supply block 5 without increasing the voltage.

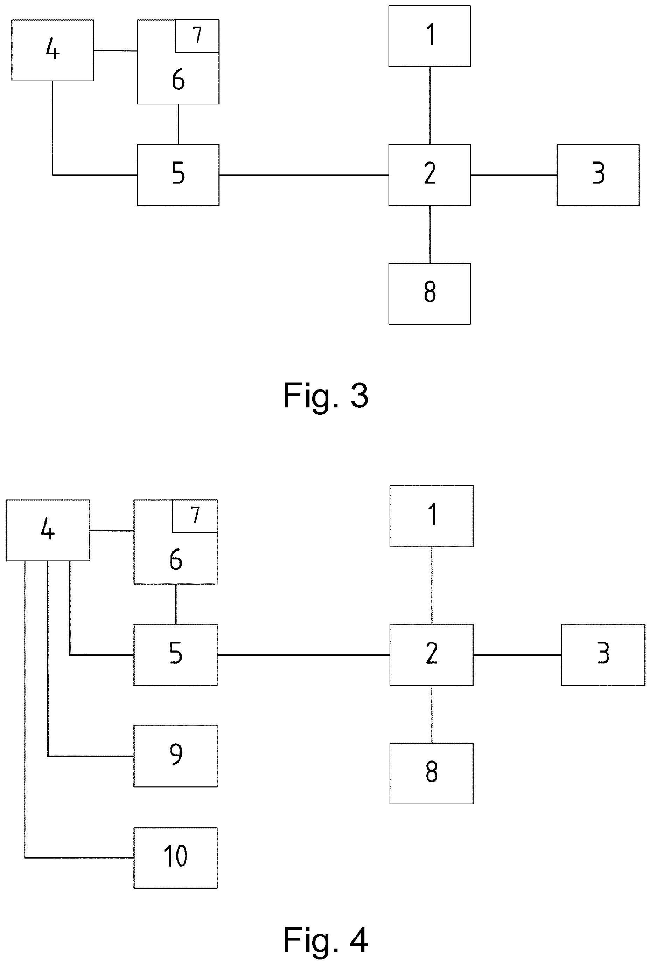

### Third embodiment, shown in figure 3.

The input for charge and/or power supply 4 is connected directly with the battery block 6, without increasing the voltage, as well as to the power supply block 5. As in the first embodiment, the battery block 6 is charged directly from the input for charge and/or power supply 4. Furthermore the power supply block 5 is powered directly from the input for charge and/or power supply 4 and provides the power supply for the rest of the internal blocks of the fiscal device. At the same time the battery block 6 is connected to the power supply block 5, in order to charge it in cases the fiscal device is not connected to a power supply source or when the voltage of the input current is insufficient to supply the blocks of the fiscal device.

The fiscal device can be provided with a printing mechanism 9 and/or with a device for data transfer via a wireless transmission medium, designed as communication module 10, which turns on/off the GSM/GPRS communication module, wherein the communication module could be compatible with third generation mobile telecommunication technology (3G). Moreover, the communication module 10 could also include Bluetooth^{®}, Wi-Fi, NFC (Near Field Communication), etc.

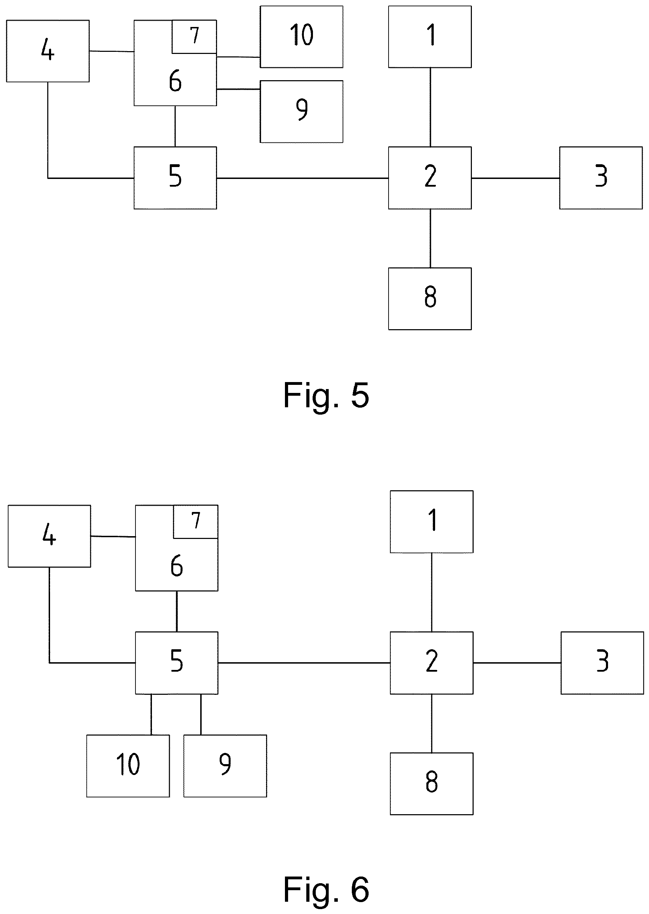

In all of the three described embodiments of the invention, the printing mechanism 9 or the wireless communication module 10, with appropriately chosen electrical characteristics, could be provided with power supply in several ways:
- directly from the input for charge and/or power supply 4, respectively without increasing or converting the voltage (figure 4);
- directly from the battery block, respectively without increasing or converting the voltage (figure 5), or
- through the power supply block 5 (figure 6).

When the battery block 6 includes two or more battery cells 7, they form a battery pack. In a preferable embodiment the battery cells 7 are connected in such a way that the battery block 6 is with increased maximum current and capacity, while keeping the same resulting output voltage. Depending on the power supply source are defined the modes of charge and discharge from the battery block 6.

In addition, the power supply block 5 could be adapted to control the charge and discharge of the battery block 6, via actuating mechanisms which are set as a limit values on parameters stored in the internal registers of power supply block 6. Such are the charge current, admissible current consumed by the external power supply source, temperature of the battery pack, etc. Also, different values are set for the charging circuit, detection of the external power supply. This is ensured with logical analog-to-digital circuits (LADC). The power supply block 5 is configured by the central processing unit 2 which sends data and commands to the power supply block 5.

Additionally, the power supply block 5 could incorporate protective elements in its circuit such as fuses, coupling elements for attaching of the battery block, socket for the battery block and other mechanical fittings for securing the individual building blocks.

The reference numbers of the technical features which are given in the claims only for the purpose to increase the understanding of the claims and therefore these reference numbers have no limiting effect in terms of the interpretation of the elements, marked with these reference numbers.

## Claims

1. Low voltage fiscal device for input and processing of fiscal data, comprising one or more means for data input (1), a data processing block (2), a fiscal memory (3), an input for charge and/or power supply (4) for attaching to a source of electrical power supply, a power supply block (5) with a voltage/current regulator adapted to convert and distribute the voltage to internal blocks of the device, and a battery block to accumulate electrical energy (6) with at least one battery cell (7), **characterized in that** the input for charge and/or power supply (4) is a low voltage input for direct voltage with values up to essentially 5.5V, wherein all internal blocks of the fiscal device are adapted to be provided with power supply, directly or indirectly from the input for charge and/or power supply (4), with direct voltage and values up to essentially 5.5V, without increasing the voltage.

2. The low-voltage fiscal device from claim 1, **characterized in that** the input for charge and/or power supply (4) is a standard USB port.

3. Low voltage fiscal device from claim 2, **characterized in that** said standard USB port, used for charge and/or power supply, is also adapted to receive and transmit data from and to external devices.

4. Low voltage fiscal device according to any of the previous claims **characterized in that** the input for charge and/or power supply (4) is connected to provide voltage directly to the battery block (6) only, wherein the battery block (6) is adapted to supply the internal blocks of the device through the power supply block (5).

5. Low voltage fiscal device according to any of the claims from 1 to 3 **characterized in that** the input for charge and/or power supply (4) is connected to provide voltage to the power supply block (5) only, wherein the power supply block (5) is adapted to charge the aforementioned at least one battery cell (7) of the battery block (6).

6. Low voltage fiscal device according to claim 5 **characterized in that** the voltage of said at least one battery cell (7) of the battery block (6) is selected in such a way that it allows charging the battery block (6) directly from the low voltage input for charge and/or power supply (4) through the voltage/current regulator of the power supply block (5), without increasing the voltage.

7. Low voltage fiscal device according to any of the claims from 1 to 3 **characterized in that** the input for charge and/or power supply (4) is connected directly to provide voltage both to the battery block (6), without increasing the voltage, and to the power supply block (5), wherein the battery block (6) is also connected to supply voltage to the power supply block (5).

8. Low voltage fiscal device according to any of the previous claims **characterized in that** it additionally comprises in its configuration one or more of the following modules: means for data visualization (8), a printing mechanism (9), a wireless communication module (19) for data transfer.

9. Low voltage fiscal device according to claim 8 **characterized in that** the printing mechanism (9) is adapted to be directly connected to the low voltage input for charge and/or power supply (4), without increasing the voltage.

10. Low voltage fiscal device according to claim 8 **characterized in that** the wireless communication module (10) is adapted to be directly connected to the low voltage input for charge and/or power supply (4), without increasing the voltage.

11. Low voltage fiscal device according to claim 8 **characterized in that** the printing mechanism (9) is adapted to be directly connected to the battery block (6), without increasing the voltage.

12. Low voltage fiscal device according to claim 8 **characterized in that** the wireless communication module (10) is adapted to be directly connected to the battery block (6), without converting the voltage.

13. Low voltage fiscal device according to any of the previous claims **characterized in that** the battery block (6) comprises two or more battery cells (7), forming a battery pack, wherein the battery cells are connected in such a way that the battery block (6) is with increased maximum current and capacity while keeping the same resulting output voltage.
